# EUROPEAN PATENT SPECIFICATION

(11) **EP 3 013 096 B1**
(45) Date of publication and mention of the grant of the patent: **19.10.2016**
(21) Application number: 14189575.5
(22) Date of filing: 20.10.2014
(51) Int. Cl.: H04W 36/02

(54) **Improving mobile user experience in patchy coverage networks**
Verbesserung der Mobilnutzererfahrung in Netzwerken mit lückenhafter Abdeckung
Amélioration de l'expérience de l'utilisateur mobile dans des réseaux de couverture inégale

(43) Date of publication of application: 27.04.2016
(73) Proprietor: FUJITSU LIMITED, Nakahara-ku, Kawasaki-shi Kanagawa 211-8588 (JP)
(72) Inventor: Hunukumbure, Rajaguru Mudiyanselage Mythri, Hillingdon, Greater London UB8 3WF (GB)
(74) Representative: Stebbing, Timothy Charles

(56) References cited:
- EP-A1- 2 129 053
- WO-A1-2008/076073
- GB-A- 2 441 166
- US-A1- 2004 081 119
- US-A1- 2012 155 431

## Description

### Field of the Invention

The present invention relates to wireless communication and more particularly, wireless communication using femto cells in areas of patchy coverage.

### Background of the Invention

Cellular wireless networks are widely known in which base stations (BSs) communicate with mobile devices (also called terminals, subscriber stations or user equipments (UEs) within range of the BSs.

The geographical areas covered by base stations are generally referred to as cells, and typically many BSs are provided in appropriate locations so as to form a network or system covering a wide geographical area more or less seamlessly with adjacent and/or overlapping cells. (In this specification, the terms "system" and "network" are used synonymously except where the context requires otherwise). In each cell, the available bandwidth is divided into individual resource allocations for the mobile devices which it serves, allowing services to be provided to the users. As users move about, their mobile devices move among the cells, prompting a need for handovers between the base stations of adjacent and/or overlapping cells.

Handover in wireless systems is conventionally based on downlink (DL) signal quality: when the DL signal quality as measured by the mobile terminal using reference signals transmitted by the base stations drops below a certain threshold, the mobile device is handed over to one of the suitable neighbours.

One type of cellular wireless communication network is based upon the set of standards referred to as Long-Term Evolution (LTE). In LTE, the measurement most commonly used for handover is the Reference Signal Received Quality (RSRQ), which is an indicator of the wanted signal quality which takes into account the interference levels, or the Reference Signal Received Power (RSRP).

As the UE moves out of the coverage area of its current serving cell, after the RSRQ or RSRP with respect to a neighbour cell exceeds, by a sufficient margin called the "offset", the RSRQ/RSRP with respect to the serving cell, the mobile device transmits this information to the base station of the serving cell, and in one form of handover the serving base station or a higher-level node determines that a handover is required to another "destination" base station. If no destination base station is available, the result is radio link failure (RLF) and disconnection of the mobile device from the network.

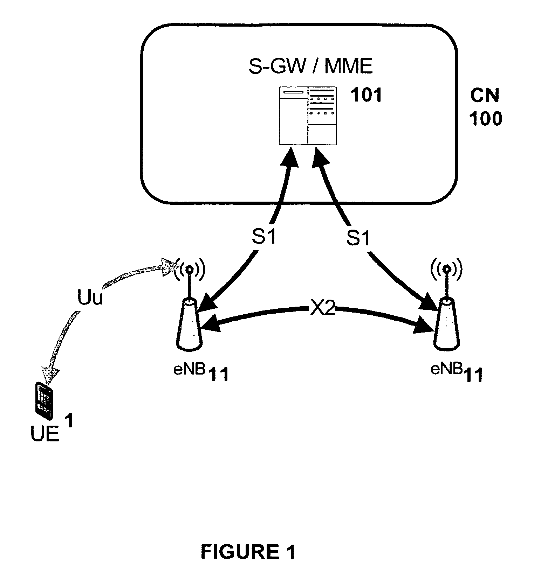

The network topology in LTE is illustrated in Figure 1. As can be seen, each UE 1 connects over a wireless link via a Uu interface to an enhanced node-B or eNB 11. Each eNB 11 in turn is connected by a (usually) wired link using an interface called S1 to higher-level entities (higher layers) in a Core Network (CN) 100, including a Serving Gateway (S-GW) and a Mobility Management Entity (MME), jointly denoted 101 in Figure 1, for managing the system and sending control signalling to other nodes, particularly eNBs, in the network.

In addition (not shown), a Packet Data Network (PDN) Gateway (P-GW) is present, separately or combined with the S-GW, to exchange data packets with any packet data network including the Internet. Thus, communication is possible between the LTE network and other networks, including other cellular wireless communication networks and the Internet, and users are able to use applications on their mobile devices such as video-on-demand, which involve continuously downloading data packets from higher layers, such as a server of the network operator, or from the Internet. Such applications are referred to below as "data-centric" applications.

Figure 1 shows what is sometimes called a "homogeneous network"; that is, a network of base stations in a planned layout and which have similar transmit power levels, antenna patterns, receiver noise floors and similar backhaul connectivity to the core network 100. Current wireless cellular networks are typically deployed as homogeneous networks using a macro-centric planned process. The locations of the base stations are carefully decided by network planning, and the base station settings are properly configured to maximise the coverage and control the interference between base stations. However, it is widely assumed that future cellular wireless networks will adopt the structure of the so-called "heterogeneous network", composed of "small cells" (including so-called Femto, and/or Micro or Pico cells) in addition to, or even instead of, macro cells. For example, although the Macro cell may have a radius of tens of kilometres, each Femto cell may have a range of only tens of metres. Pico and Micro cells are generally intermediate in size between Femto and Macro cells.

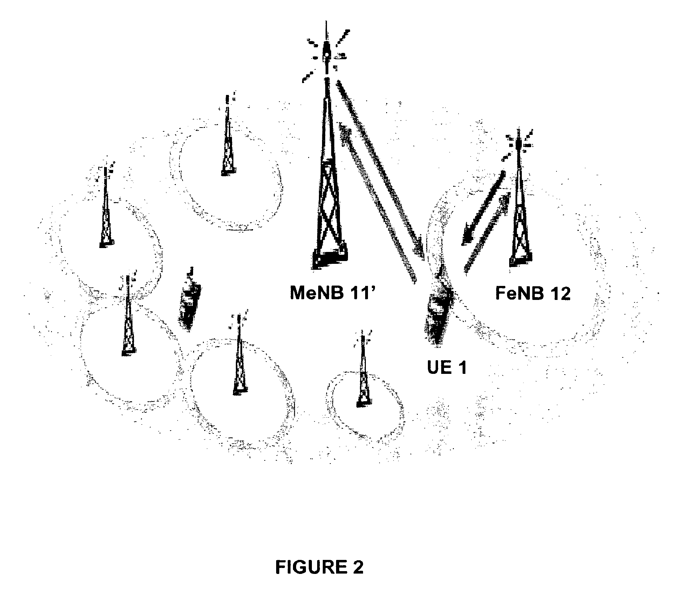

Figure 2 depicts a simple heterogeneous network. The large outer ellipse represents the coverage area or footprint of a Macro cell provided by a base station 11' (Macro eNB or MeNB in LTE). The smaller ellipses represent Femto cells within the coverage area of MeNB 11', each having a respective base station 12 (Femto eNB or FeNB, which may also be called a Home eNB or HeNB in some cases). Here, the Macro cell is a cell providing basic "underlay" coverage in the network of a certain area, and the Femto cells are overlaid over the Macro cell using separate frequency spectrums for capacity boosting purposes particularly within so-called "hot spot zones", improving the quality of service (QoS) for mobile applications. A UE 1 is able to communicate both with MeNB 11' and one of the FeNBs 12 as indicated by the arrows in the Figure. As a UE moves around, handovers may be triggered from a Femto cell to a Macro cell or vice-versa, or between two Femto cells. Femto cells being relatively small in size as already mentioned, the frequency of handovers will be greater than for a homogeneous Macro cell network.

In the case of Figure 2, the Femto cells are wholly within a macro cell such that coverage is uninterrupted as a UE moves within the macro cell. However, a macro cell need not always be present, particularly in rural areas or remote areas. In many rural/ remote areas, the provision of macro cells with their high deployment cost and backhaul provision cost is not commercially viable. Even in the absence of macro cells, however, Femto cells with FeNBs having a home/office broadband Internet connection is a possible solution for providing mobile broadband access to rural areas.

The deployment of small cells in public buildings in rural towns is an attractive option for both the operators and the landlords of public buildings. Femto base stations can be installed by simply connecting them to an existing broadband Internet connection on the premises, much like a Wi-Fi router. The operators do not have to bear the deployment and maintenance costs as well as the significant backhaul provision costs. The costs of placing Femto cells in public areas within buildings (much lower than placing Femto cells outdoors) will be borne by the landlords, who can expect increased business from customers in return for the provision of enhanced coverage.

Such a Femto cell network in a rural town can be included with Self Organising Network (SON) features, so that the network arranges the coverage patterns (with a limit on maximum transmit power) optimally. However, due to the absence of macro cells, there are very likely to be coverage gaps in these non-planned networks. In other words, the coverage will be discontinuous (patchy). This does not necessarily imply a complete absence of wireless coverage; of relevance for present purposes is whether the coverage is sufficient to service data-centric applications of the user.

Another situation where such coverage gaps could occur is in under-ground transport links (underground railways such as the "Tube" in London). While good Femto cell based coverage and capacity can be provided at under-ground stations with fixed backhaul links, providing capacity within Tube carriages is costly and difficult. The carriages can be equipped with mobile Femto cells to provide the coverage, however provision of high (demanded) capacity when the Tube train is moving can be problematic, due to the limitations in the quality of mobile, wireless backhaul solutions.

The main problem in an unplanned Femto cell network as detailed above is the impact of patchy coverage on the mobile user. In many urban/ sub-urban area situations, there are Macro cells available to provide the underlay coverage so the connectivity to the user will not be interrupted. However for many rural/remote areas without Macro cell coverage, the most cost effective way of providing mobile broadband is through the unplanned deployment of Femto (or small) cells. In these deployments, the mobile user will lose connectivity and will have to re-start data-centric applications every time the user leaves one Femto cell and moves into the coverage area of another Femto cell. This significantly impacts the quality of experience for the mobile user. Meanwhile, the load for the core network is increased, as the connections have to be re-established and some of the data packets have to be repeatedly distributed. This can degrade the performance of the overall network and impact even the users not affected by the discontinuity of service.

WO 2008/076073 A1 discloses a handover operation in LTE including transfer of buffered data from a source base station to a target base station. The source base station has a handover controller configured to generate an indication to a terminal to wait for a status report from the base station before executing the handover. The handover of the terminal to the target base station includes sending a handover command to the terminal, identifying a radio bearer with outstanding data to be transmitted and for which a status report is requested from the terminal, then requesting the status report for the identified radio bearer from the terminal. The terminal waits for the status report to be acknowledged before performing the handover. In this way, a lossless handover can be provided for bearers that require very low loss probability.

Similar techniques are also disclosed in GB2441166A, EP2129053A1, US2012/155431A1, and US2004/081119A1. However, such techniques do not deal with the above problem of patchy coverage where connectivity is interrupted.

### Summary of the Invention

According to a first aspect of the present invention, there is provided a wireless communication method for providing a service to a user through a wireless communication system, the service involving recurrent delivery of data to a terminal of the user via one or more of a plurality of neighbour base stations, the method comprising, at a first base station:
obtaining, from a core network of the wireless communication system, data for delivery to the terminal and, whilst the terminal is in wireless communication with the first base station, transmitting the data to the terminal;
receiving a notification that a second base station among said one or more base stations has established, or is predicted to establish, wireless communication with the terminal;
transferring the accumulated data to the second base station in response to the notification; and
informing the core network of a handover to the second base station;
the method further comprising, at the second base station:
transmitting the transferred accumulated data to the terminal, and then starting to obtain, from the core network of the wireless communication system, data for delivery to the terminal; characterised in that
the wireless communication system has discontinuous coverage with gaps between coverage areas of the neighbour base stations, and in that the method further comprises, at the first base station, recognising a radio link failure in wireless communication with the terminal and in response, informing one or more neighbour base stations and accumulating data for delivery to the terminal without informing the core network of the radio link failure.

Thus, the wireless communication system does not provide coverage in all locations and there are gaps between the coverage areas of neighbour base stations, at least in terms of ensuring the data delivery required by the service. In other words the coverage is "patchy".

That is, once radio link failure of wireless communication of the first base station with the terminal has occurred, there may be a period of interruption prior to the second base station establishing wireless communication with the terminal. Data for delivery to the terminal is accumulated (buffered) during this interruption. The accumulated data is transferred to the second base station which then transmits the data to the terminal, and the first base station informs the core network of a handover (in other words, informs the core network that the second base station has taken over servicing the user). After that, the second base station starts to receive further data from the core network,

The core network includes so-called "higher layers" from which the base stations obtain the data for delivery to the terminal. In the above accumulating step, the higher layers continue to transfer data to the first base station as if the terminal were still connected to the first base station. The first base station may create a "virtual terminal" for this purpose as explained later.

The first base station, as well as the one or more neighbour base stations including the second base station, are preferably small cell base stations, such as femto stations. The term "base station" has a broad meaning and encompasses, for example, an access point or transmission point. The "terminal" means a user's mobile device (UE in LTE).

The above mentioned recurrent delivery of data means that there is a stream or sequence of data (also referred to as "content") which needs to be delivered to the user in order to provide a continued service. Once the accumulated data has been transferred to the second base station, the second base station transmits this data to the user device. After that, the second base station can resume the service to the user by obtaining, from core network in the system, further data which follows the buffered data. For example such "further data" may be a portion of a video stream which follows chronologically after the portion already delivered to the user.

Preferably, informing one or more neighbour base stations comprises providing an identifier of the terminal, this notification being issued by recognising the identifier. The identifier may be provided as part of a UE context held by the first base station.

The source of this notification varies for different embodiments of the present invention.

In one embodiment, the notification is issued by the second base station, and includes at least one of:
an indication that the terminal has established wireless communication with the second base station; and
an indication that the accumulated data is required to be transferred.

In this way it is possible for the second base station to confirm to the first base station that there is a need for the accumulated data to be transferred.

The method may further comprise, at the terminal, confirming to the second base station that accumulated data is to be delivered to the terminal. This allows the user to confirm that he or she still wishes to receive the data, and avoid any unnecessary data charges if not.

Another embodiment of the present invention involves a self-organizing network, SON, entity connected to, or provided in one of, the base stations. Operations in the SON entity include:
receiving information when the terminal establishes wireless communication with a base station, so as to track the presence and movement of the terminal;
predicting a movement of the terminal towards the second base station based on the received information, and
instructing the first base station to transfer the accumulated data to the second base station based on the predicted movement.

Thus, it is not always necessary for the second base station to inform the first base station that it has established wireless communication with the terminal. The likelihood of this occurring can be predicted in advance, in which case the notifying can take place prior to the first base station recognising the radio link failure with the terminal.

Another embodiment of the present invention is applied to base stations located at intervals on a transport route and/or within moving vehicles such as underground railway carriages. In this case the first and second base stations will be adjacent along the transport route, but wireless communication along the transport route may be discontinuous (or so slow as to be effectively discontinuous). In this case, the above mentioned receiving a notification comprises the first base station being notified that the terminal is predicted to establish wireless communication with the second base station (for example, due to travelling on a vehicle which is heading towards the second base station), and the transferring is performed in advance of the second base station establishing wireless communication with the terminal.

More particularly, in the above embodiment, the first and second base stations may be located in adjacent stops (stations) of an underground railway, in which case the terminal is predicted to establish wireless communication with the second base station due to travelling on the transport route between the adjacent stops.

One of the first and second base stations may be mobile, within a train carriage of the underground railway, in which case the first base station can predict that the terminal is likely to leave the coverage area of the first base station and connect with the in-carriage second base station. Various arrangements are possible.

In any method defined above, there is preferably a mechanism to limit the buffering of data by the base station. One alternative is that the first base station starts a timer in response to recognising the radio link failure, and discarding the accumulated data upon expiry of a predetermined time interval, together with (preferably) informing the core network of the radio link failure.

Instead, or in addition, the first base station monitors the amount of accumulated data, and discards the accumulated data when the amount exceeds a predetermined limit.

In any method defined above, the accumulating may comprise the first base station creating a virtual terminal which the first base station treats as remaining in wireless communication with the first base station. This "virtual terminal or "virtual UE" allows the first base station for its internal purposes to act is if the terminal were still present, except that instead of transmitting data as it arrives from the core network, this data is accumulated in the first base station for as long as the virtual terminal exists. The virtual terminal is killed once the accumulated data has been transferred to the second base station.

According to a second aspect of the present invention, there is provided a first base station in a wireless communication system for providing a service to a user, the service involving recurrent delivery of data to a terminal of the user, the first base station configured to:
obtain, from a core network of the wireless communication system, data for delivery to the terminal and, whilst the terminal is in wireless communication with the first base station, transmit the data to the terminal;
receive a notification that a second base station among said one or more base stations has established, or is predicted to establish, wireless communication with the terminal; and
transfer accumulated data to the second base station in response to the notification;
characterised in that the first base station is further arranged to recognise a radio link failure in wireless communication of the terminal with the first base station and in response, inform one or more neighbour base stations and accumulate data for delivery to the terminal without informing the core network of the radio link failure.

According to a third aspect of the present invention, there is provided a second base station in a wireless communication system for providing a service to a user, the service involving recurrent delivery of data to a terminal of the user, characterised in that the second base station is configured to:
receive, from a first base station, information on a radio link failure in wireless communication of the first base station with the terminal;
establish wireless communication with the terminal, and notify the first base station accordingly;
receive, from the first base station, data for delivery to the terminal which the first base station obtained from the core network of the wireless communication system and accumulated following the end of wireless communication of the first base station with the terminal;
transmit the accumulated data to the terminal; and then
start to obtain, from the core network of the wireless communication system, data for delivery to the terminal.

According to a fourth aspect of the present invention, there is provided a wireless communication system for performing any method as defined above.

More particularly there is provided a wireless communication system with discontinuous coverage for providing a service to a user, the service involving recurrent delivery of data to a terminal of the user, the system comprising the terminal, a first base station and one or more neighbour base stations of the first base station including a second base station, wherein
the first base station is configured to:
   obtain, from a core network of the wireless communication system, data for delivery to the terminal and, whilst the terminal is in wireless communication with the first base station, transmit the data to the terminal;
   detect a radio link failure in wireless communication with the terminal and in response, inform one or more neighbour base stations and accumulate data for delivery to the terminal without informing the core network of the radio link failure;
   receive a notification that a second base station among said one or more base stations has established, or is predicted to establish, wireless communication with the terminal; and
   transfer the accumulated data to the second base station in response to the notification; and
the second base station is configured to:
   receive, from the first base station, information of the radio link failure in wireless communication of the first base station with the terminal;
   establish wireless communication with the terminal, and notify the first base station accordingly;
   receive, from the second base station, data for delivery to the terminal which the first base station accumulated following the radio link failure;
   transmit the accumulated data to the terminal; and then
   start to obtain, from the core network of the wireless communication system, data for delivery to the terminal.

In a further aspect, the present invention provides software in the form of computer-readable instructions which, when executed by a processor of radio equipment, provides the first or second base station as defined above. Such software may be recorded on one or more non-transitory storage media.

In general, and unless there is a clear intention to the contrary, features described with respect to one aspect of the invention may be applied equally and in any combination to any other aspect, even if such a combination is not explicitly mentioned or described herein.

The method features need not be carried out in the order in which they are presented in the claims. In particular the notifying may take place before the first base station ceases wireless communication with the terminal.

As is evident from the foregoing, embodiments of the present invention are aimed at improving the mobile user experience in patchy coverage networks, especially in rural areas. In a rural town, there can be many Femto cells (small cells) installed in public buildings like pubs, shops, post office, train station and so forth where the coverage is not necessarily contiguous. When the users move about in the town with a mobile application running, the service will continually break. Some data applications like video on demand and file transfers will have to be repeatedly re-started, degrading user experience. In embodiments of the present invention, if the mobile user is running such a data application and moving away from the coverage of the serving Femto cell, this Femto cell to keep the UE (user equipment) context and buffer the data coming from the network. The UE-ID (or context) will be informed to neighbour cells, so that when the UE connects with a neighbour cell the data service can be continued from the point of breakage.

A significant benefit of embodiments is that the user experience can be enhanced by allowing the data service to continue, albeit with breaks at segments where there is no coverage. The user does not have to continually re-start the application, by logging into a particular website, for example. The caching of the data at the edge of the network (at Femto cells nearer to the user) makes the packet delivery faster, when the UE is re-connected. Also the core network does not see a breakage of the content delivery, so the overheads in establishing content delivery links on the core network are reduced. With this solution, the limitations in the patchy network in service discontinuity can be mitigated. The users will be more likely to run data (download) applications even when they know that their movement will break the connectivity. Thus in the long run, this solution will increase data usage in patchy coverage areas and indirectly contribute to more revenue for the network operators.

### Brief Description of the Drawings

Reference is made, by way of example only, to the accompanying drawings in which:
Figure 1 shows a network topology in LTE;
Figure 2 illustrates the principle of a heterogeneous network;
Figure 3 is a conceptual diagram of a method embodying the present invention;
Figure 4 is a flowchart of a signalling sequence employed in an embodiment of the present invention;
Figure 5 is a schematic block diagram of a mobile device for use in the present invention; and
Figure 6 is a schematic block diagram of a base station for use in the present invention.

### Detailed Description

As mentioned in the introduction, considering a Femto cell network in a rural town for example, due to the absence of macro cells, there are very likely to be coverage gaps between the femto cells. Embodiments of the present invention can provide a solution to this problem by caching content and forwarding it to a neighbour cell when requested in an attempt to minimize the disruption to content delivery to the end user.

The proposed scheme is based on, instead of informing higher layers when a UE leaves the coverage area of a FeNB (corresponding to a "first base station" as claimed), continuing to request and buffer the data/content from the higher network layers for a limited time, in the hope that the UE will connect to a neighbour FeNB ("second base station"), allowing the accumulated data to be transferred and the service to continue without starting again. One way to look at this is that the original FeNB creates a "virtual UE" when the UE leaves the coverage area, and for the lifetime of the virtual UE, continues to act (from the viewpoint of higher layers) as if the UE were still present.

If the UE is running an application which pre-dominantly downloads data packets (DL heavy) the solution can be applied to such UEs. The higher layers in the network will not notice that the connectivity to the UE has been broken and will continue to provide the data as requested by the Femto eNB. The source Femto eNB pursues two options after the UE has left the coverage area. It will inform the UE ID to the neighbours and wait for an indication of re-connection, either to one of the neighbour cells or back to the original FeNB.

If this indication comes from a neighbour FeNB within a set period of time, the source eNB transfers the buffered UE data to the new FeNB and informs the higher layers of a handover. If the UE re-connects to the source FeNB, the "indication" is internal and the source FeNB resumes transmitting data to the UE, starting with the buffered data packets.

If the indication does not come within the allocated time the source FeNB will discard the buffered data and indicate to the higher layers a radio link failure (RLF) with the UE. The length of waiting time and the capacity to retain buffered data are related and these can be fine-tuned to suit specific deployments (FeNB capabilities). If the individual Femto eNBs are located in a rural town for example, the waiting time can be set to reflect the walking time from the source Femto eNB in question to the furthest neighbour FeNB. The waiting times can be estimated by analysing the past records of UEs leaving one Femto cell and connecting to another. The average connection time can be taken as the wait time between two particular Femto eNBs. If the Femto cells change location, the wait times can be re-estimated.

While buffering the data packets, if the storage requirements for the data become a concern to the Femto eNB, it can instruct the higher layers to slow down the data transfer rate. In a TCP type data transfer, this can be achieved through the delaying of acknowledgements (ACK) for the received data packets. Embodiments are primarily aimed at delay tolerant applications, where a connection is established first, and which are more likely to use TCP data transfer protocols.

Some of the application servers have the capability to keep track of the data packet delivery to the UE and if the connection is broken and re-connected, to resume the data delivery from the point of interruption. Many of the applications however, do not have this capability. Embodiments of the present invention bring this capability to the operator network, make the data available at the edge of the network (Femto eNBs) and provide a higher user experience irrespective of the application server the user is connected to. This solution will bring a clear distinction in quality for the cellular network which adapts it.

Creating virtual (or proxy) entities is a well-known concept in networking. Mostly these entities are like virtual servers, created for multiplexing the use of physical hardware and/or for implementing security protocols. By contrast the concept of, in effect, creating a "virtual UE" at the very edge of the network is novel. The Femto eNB (not the network higher layers) is in charge of transferring or removing this virtual UE. The higher layers are completely unaware of this virtual UE creation.

One interpretation of the present invention can be that it involves a delayed notification of a handover or a RLF of a particular UE, to higher layers in the network. This delaying process allows the UE (in most cases) to re-connect to a neighbour FeNB and the packet delivery can be resumed without disruption to the higher layers. In the case of a RLF, the buffered data is discarded and this is a waste of resources. In situations where the same UEs (users) connect to the Femto eNBs (like residents of nearby villages coming to the town), there can be self-learning algorithms to predict the movement (initially based on past events) of users (UEs) and minimize these wastages on buffering. However, this data buffering cost is minimal, when compared to the costs of deploying a planned network in the remote/ rural areas.

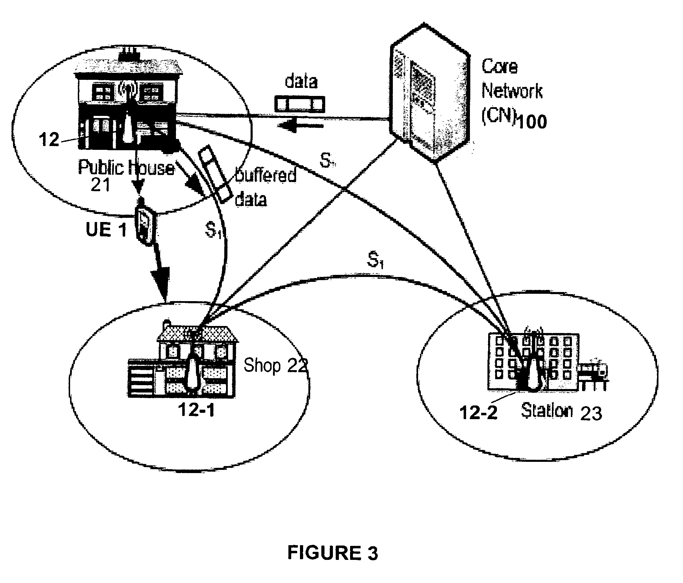

A first embodiment of the present invention, applied to a village in a rural area, will now be explained with reference to the conceptual diagram of Fig. 3. Here, it is assumed that each of a public house 21, a shop 22 and a station 23 are equipped with respective femto base stations 12, 12-1 and 12-2. These may be located indoors in each case, as already mentioned. Ellipses around each of the femto base stations indicate the coverage area (cell) of each base station, and as can be seen, the coverage is discontinuous (patchy).

As illustrated in Figure 3, each of the Femto eNBs 12, 12-1 and 12-2 is connected to a core network 100, and logical S1 links are assumed to exist in-between each two Femto eNBs. Logical links mean that the physical path may or may not be direct, but the two eNBs are connected for data transfer. An indirect path would be through the core network. For present purposes, the logical links are restricted to pairs of FeNBs in the same locality. It can be assumed that FeNBs know (perhaps by signalling from higher layers) which other FeNBs are operating in the same geographical area. The process to be described preferably takes place in a relatively well-defined and restricted geographical extent, within the boundary of the village for example.

Initially, in this scenario, a UE 1 is in wireless communication with FeNB 12 of public house 21, and receives data which the femto eNB has obtained via the core network. Suppose that the user leaves the public house 21 and decides to visit the shop 22 on the way home; as UE 1 moves away from the cell of femto BS 12, it experiences a RLF but may be able to re-connect with the network once it enters the cell of neighbour base station 12-1. FeNB 12-1 is thus a "destination" FeNB for the UE 1.

At this point, and following signalling as explained below, buffered data in the form of packets is forwarded over the logical S1 link from FeNB 12 to FeNB 12-1. The transferred data is then wirelessly transmitted from the destination FeNB 12-1 and after this has been completed, FeNB 12-1 can request fresh data from the CN 100.

The advantage, even if the transferred data has to go through the core network, is that the user does not have to re-start the video stream, but rather he or she can receive it from the point it got disconnected. The user experience is enhanced. The higher layers (or the core network) is not aware of the UE disconnection, and signalling need not be re-established in this solution.

By contrast, the conventional approach in the scenario shown in Fig. 3 is that the serving FeNB (12 in this case) will discard data once RLF occurs, requiring at least that data to be re-sent and possibly the whole service to be re-started (for example a video stream might start again from the beginning, or a file download repeated again from the start of the file).

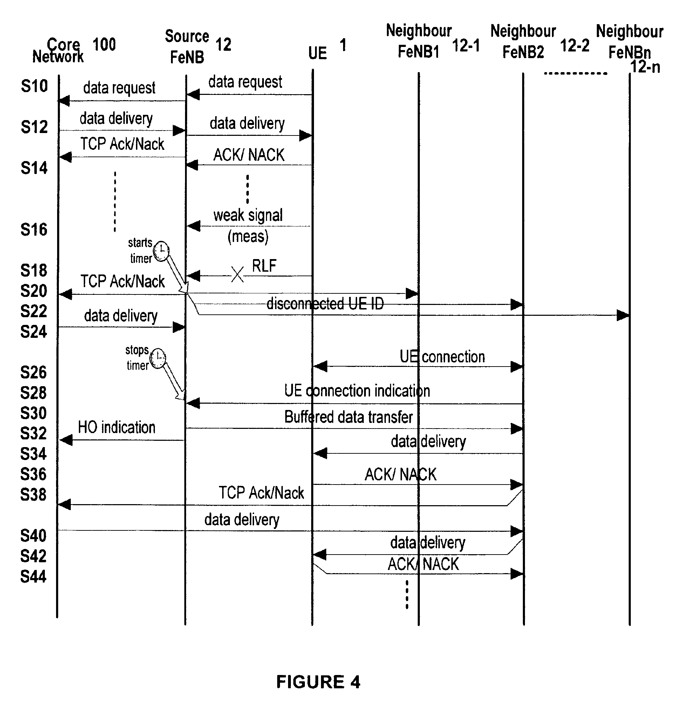

Fig. 4 is a detailed signalling diagram explaining the flow of information and signalling between all the entities in this embodiment. In Fig. 4, the vertical axis represents time, with later events being further down the diagram. Each bold vertical line represents a different node in the wireless communication system, including (from left) the CN 100, Source FeNB 12, UE 1, and n neighbour FeNBs 12-1, 12-2, ... 12-n.

Initially, the UE 1 is in wireless communication with Source FeNB 12. In step S10, the user initiates a service of some kind, such as video-on-demand or a file download, by sending a data request to the source FeNB 12. This request in turn is forwarded by Source FeNB to the CN 100. Then in step S12, an amount of data (such as a packet, or predetermined number of packets) is retrieved and delivered to source FeNB 12, which transmits the data wirelessly to the UE. The transmitted data is acknowledged in step S14, both by source FeNB 12 to CN 100 and from UE 1 to source FeNB 12. In the event that a specific data transmission was not received for any reason, the UE 1 sends a NACK and the transmission is repeated. The kind of service being considered here is a "data-centric" service requiring a sustained transmission of data over an extended period; this is also referred to as "recurrent" data delivery. Therefore, the steps S12 and S14 are repeated at intervals whilst the UE 1 is within the cell of source FeNB 12, as shown by dotted lines in the signalling diagram. In this way the service progresses; for example a streamed video is transmitted frame by frame and viewed by the user on the UE 1's screen.

The data transfer to the UE 1 continues in this manner, until the UE moves out of the coverage area of the source Femto eNB. Then, in step S16, the signal strength measurements (provided to the source FeNB) will show signal weakening and radio link failure (RLF) will follow in step S18. At this point, the source FeNB will create a "virtual UE" as already mentioned, and start buffering the data intended for this UE. The source FeNB 12 also starts a timer, to set a limit to the waiting time (and/or buffered data amount) for this UE to re-connect with one of the neighbours.

It is important to note that the network layer (Core Network) does not see the disconnection of the UE, and therefore continues to provide the requested data in Step S24. As before, the source FeNB continues to acknowledge the data packets as they are received from the core network. Meanwhile, in step S22, source Femto eNB has informed all the neighbour Femto eNBs of an identification (ID) code of the UE that just left its coverage zone. Various ID codes are defined in wireless standards, such as a SIM code, which are suitable for this purpose. Preferably, not only an ID code but also the UE "context" containing UE state information, security information, UE capability information and the identities of the UE-associated logical S1-connection, is relayed to the neighbour FeNBs.

If the source eNB informs all the neighbour eNBs about the UE after leaving the cell with RLF, there is a high chance that this UE will re-connect and want to resume the data connection. A converse arrangement would be that each FeNB informs its neighbours every time it accepts a new connection, but this would be less preferable: some (or many) of these new connections will be UEs starting new communications, not UEs coming from another eNB. Hence this would involve a lot of wastage in signalling. Another possibility would be for the UE to inform the destination FeNB about which FeNB it was previously connected to; again this is not preferable because it would require modifying the behaviour of each UE. By contrast, the signalling sequence shown in Fig. 4 does not involve any changed behaviour of UEs.

In step S26, UE 1 connects to a neighbour FeNB 12-2 (also labelled FeNB2). Upon establishing a wireless link with UE1, FeNB 12-2 recognises the UE from the ID code or context received in S22, and in S28 ("UE connection indication"), indicates this fact to the source FeNB 12. Thus, the indication to the source FeNB 12 is confined to UEs about which the source FeNB has already sent a disconnected UE ID message in S22. After preferably confirming that the UE wishes to resume the data service, FeNB2 requests the buffered data to be transferred from source FeNB 12 (this step is not shown in Fig. 4). Then in step S30, source FeNB 12 transfers the buffered data and indicates the handover process to the network 100 at this point. This prompts the network to begin sending data to FeNB 12-2 instead of to source FeNB 12. In this way the new serving FeNB 12-2 resumes communication with the network (with regard to this data connection) once the buffered data has been delivered to the UE 1.

The ability to predict the movement of UEs can help improve the efficiency of data buffering (caching) and the speed of data delivery. A group of unplanned Femto eNBs can operate as a network, with one master FeNB having SON (Self Organising Network) capabilities. This SON entity can request and store information about UE presence and movement (through identifying which FeNBs it connects to). This kind of historical data can be effectively used to predict the UE movements by identifying certain patterns. In a rural town for example, there are likely to be only a few (manageable number) of recurring UEs and their movements can be predictable. When the destination Femto eNB can be predicted with a certain degree of accuracy for a particular UE, the cached data in the source FeNB can be transferred to the destination FeNB even before the UE enters this Femto cell. The content delivery can be resumed faster, without experiencing the bottlenecks which would occur if the content had to be retrieved from the network. Also some analysis on the content these UEs are requesting, coupled with the above movement data can help the algorithm better manage and utilize the caching resources of each of the Femto eNBs.

In the situation where none of the neighbour FeNBs reports a re-connection of the UE 1, the timer will expire and the source FeNB 12 will discard the buffered data. The FeNB 12 will inform the network layers about the radio link termination and the data packet delivery to the FeNB 12 will cease. As an alternative to the timer, a caching limit can be set for the buffered data, as this is the real constraint on the Femto eNB 12. Once the caching limit is reached and the UE reconnection has not been indicated, the source Femto eNB 12 can indicate RLF to the network and discard this set of data.

A second embodiment will now be described, this embodiment applying to underground transportation systems exemplified by London's Tube. Many older systems do not have access points within carriages but only in stations. In these transportation systems, the present invention can be directly applied where the neighbour femto base stations are located in successive stations (stops) along the railway line. One advantage in this scenario is that the next access point (at the next station) is known to the Femto eNB at the current station, and details about the UEs running candidate services for this solution can be provided to the target base station(s) well in advance.

The Femto network (controller) can receive information about the particular tube or train approaching a station and it will know which direction it is heading to. This information can then be used to transfer the next segment packets to the next destination Femto eNB, located at the next station on the line.

Many newer trains or transportation systems have wireless access points (WiFi/ cellular) within the carriages to provide continuous coverage. In this case, the limitations are in the wireless backhaul which these services rely on. At the stations, the access points will have good backhaul connectivity and can exchange large volumes of data. Within the tunnels, the links are weaker so the data rates naturally drop down. The present invention is beneficial in this situation as well, where the current Femto eNB at the station can transfer a batch of data to the Femto access point in the carriage (of the train or tube) for the UEs moving into the vehicle. The Femto can also alert the Femto eNB at the next station about these UEs and proactively transfer the remaining data to the said Femto eNB at the next station.

Thus, handovers are possible both between a fixed FeNB and a moving FeNB, and from a moving FeNB to a fixed FeNB at the next station. First, the current Femto ENB located at a first station can fill the UE buffer with content and transfer the next segment of packets to a mobile Femto eNB in advance (for example as soon as the train containing that FeNB draws into the station). That mobile FeNB becomes the source eNB for the next part of the user's journey. In the tube line scenario, the user does not move away from the source eNB (in the carriage) until the tube arrives at the next station. At this point the relevant segment can be made available to the FeNB at the next station before-hand. If the source (in-carriage) FeNB has any packets left in the buffer, they can be transferred to the eNB at the next station, just as in a normal handover. The novelty here is that the destination eNB is aware of the UEs arriving before the tube arrives and will have the next data segments ready. In this case, the fixed eNBs need not be femto eNBs, but could be macro base stations.

Modern UEs have the capability to switch between WiFi and cellular services and users often switch to WiFi when the service is available. Modern Femto eNBs will support both WiFi and LTE services. The next generation of WiFi, known as carrier grade WiFi will enable seamless handover of UEs between WiFi and cellular links and will also use SIM based authentication. In this scenario, the present invention can utilize the SIM identification of a UE to work out which Femto eNB it has connected to since leaving the source Femto eNB, and then transfer the data to that eNB as documented. Even without carrier grade WiFi, newer FeNBs in the network may be equipped with an application to obtain the SIM ID of any UE that connects to it with WiFi, and use this ID to track the UE's movements to resume the data services without break-up.

As noted above, the ability to predict the movement of UEs can help improve the efficiency of data buffering (caching) in the solution. A group of unplanned Femto eNBs can operate as a network, with one master FeNB having SON (Self Organising Network) capabilities. This SON entity can request and store information about UE presence and movement (through identifying which FeNBs it connects to). This kind of historical data can be effectively used to predict the UE movements by identifying certain patterns. In a rural town for example, there are likely to be only a few (manageable number) of recurring UEs and their movements can be predictable. Also some analysis on the content these UEs are requesting, coupled with the above movement data can help the algorithm better manage and utilize the caching resources of each of the Femto eNBs.

A further embodiment is based on accounting for the actual data usage of a UE, for which a virtual entity is created by the Femto eNB. If the UE does not reconnect to a neighbour UE or indicates it does not want to continue the data application, the buffered data at the source eNB has to be discarded. The higher layers are not aware of the creation of this virtual UE and will account for the data transferred to the virtual UE as actual data usage. If this data gets discarded, the source Femto eNB has to indicate to the network (possibly to an Authentication Authorization and Accounting, AAA, server) that a certain amount of data was not delivered to the end user. Hence the end user would be charged for only the data consumed by the UE.

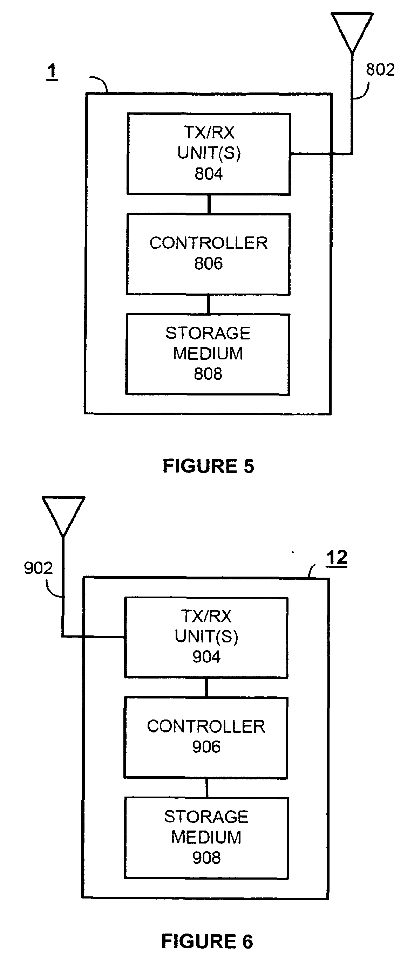

Figure 5 is a block diagram illustrating an example of a UE 1 to which the present invention may be applied. The UE 1 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The UE 1 includes transmitter/receiver unit(s) 804 connected to at least one antenna 802 (together defining a communication unit) and a controller 806 having access to memory in the form of a storage medium 808. The controller 806 may be, for example, a Microprocessor, digital signal processor (DSP), application-specific integrated circuit (ASIC), field-programmable gate array (FPGA), or other logic circuitry programmed or otherwise configured to perform the various functions described above, such as issuing a data request and receiving data packets from FeNBs in the manner outlined above. For example, the various functions described above may be embodied in the form of a computer program stored in the storage medium 808 and executed by the controller 806. The transmission/reception unit 804 is arranged, under control of the controller 806, to receive data packets from FeNBs, send requests and so forth as discussed previously.

Figure 6 is a block diagram illustrating an example of a base station (FeNB) 12 to which the present invention may be applied. The base station includes transmitter/receiver unit(s) 904 connected to at least one antenna 902 (together defining a communication unit) and a controller 906. The controller may be, for example, a Microprocessor, DSP, ASIC, FPGA, or other logic circuitry programmed or otherwise configured to perform the various functions described above, to act as either Source or Destination FeNB, including buffering data from higher layers and setting up a "virtual UE" as described earlier. For example, the various functions described above may be embodied in the form of a computer program stored in the storage medium 908 and executed by the controller 906. The transmission/reception unit 904 is responsible for transmission of data packets from, and reception of data requests, measurement reports and the like from UEs, under control of the controller 906.

To summarise, embodiments of the present invention may improve the mobile user experience in patchy coverage networks, especially in rural areas. In a rural town, there can be many Femto cells (small cells) installed in public buildings like pubs, shops, post office, train station etc. where the coverage is not necessarily contiguous. When the users move about in the town with a mobile application running, the service will continually break. Some data applications like video on demand and file transfers will have to be repeatedly re-started, degrading user experience. Our proposal is if the mobile user is running such a data application and moving away from the coverage of the serving Femto cell, this Femto cell to keep the UE (user equipment) context and buffer the data coming from the network. The UE-ID (or context) will be informed to neighbour cells, so that when the UE connects with a neighbour cell the data service can be continued from the point of breakage.

Various modifications are possible within the scope of the invention.

Although embodiments have been described above with respect to Femto cells, it will be understood that the principles of the invention can be applied to cells of various kinds, especially small cells. The term "femto" is thus to be interpreted broadly.

Moreover, embodiments of the present invention can be applied to handovers between femto and macro cells and vice-versa, where coverage is patchy.

In the second embodiment, references to "prediction" and "likelihood" of a user establishing a connection with a second base station, do not necessarily require that it is probable for such communication to be established. For example on a transport route, either of two opposite routes might be equally likely to be taken by a user. So long as there is a reasonable chance that the user will establish a connection with a second base station, it can be worthwhile to transfer buffered data in accordance with the present invention. This can include transferring buffered data to either of two possible destination base stations, or to any of more than two possible destinations.

Although reference has been made to LTE by way of illustration, the present invention is not restricted to use with LTE-based networks. The present invention can be applied to other types of wireless communication system in which small cells may be defined, including UMTS for example.

As described above with respect to Figure 4, FeNB2 requests the buffered data to be transferred from the original source FeNB after confirming with the user that the service is still required. Such a step is preferable particularly if the user must pay for the amount of data consumed; however it is not necessarily essential. Another possibility is that the network (for example, SON entity or higher layer entity) may be able to predict based on past behaviour whether or not a specific UE is likely to resume a service after disconnection, and then either prompt the user or transfer the data automatically as appropriate.

### Industrial Applicability

In embodiments of the present invention, the user experience in running a data-centric mobile application on a patchy-coverage network can be enhanced by allowing the data service to continue, albeit with breaks at segments where there is no coverage. The user does not have to continually re-start the application, by logging into a particular website, for example. The caching of the data at the edge of the network (at Femto cells nearer to the user) makes the packet delivery faster, when the UE is re-connected. Also the core network does not see a breakage of the content delivery, so the overheads in establishing content delivery links on the core network are reduced. With this solution, the limitations in the patchy network in service discontinuity can be mitigated. The users will be more likely to run data (download) applications even when they know that their movement will break the connectivity. Thus in the long run, this solution will increase data usage in patchy coverage areas and indirectly contribute to more revenue for the network operators.

## Claims

1. A wireless communication method for providing a service to a user through a wireless communication system, the service involving recurrent delivery of data to a terminal (1) of the user via one or more of a plurality of neighbour base stations (12, 12-1, 12-2, .. 12-n), the method comprising, at a first base station (12):
obtaining, from a core network (100) of the wireless communication system, data for delivery to the terminal (1) and, whilst the terminal is in wireless communication with the first base station (12), transmitting the data to the terminal;
receiving a notification that a second base station (12-2) among said one or more base stations has established, or is predicted to establish, wireless communication with the terminal (1);
transferring accumulated data to the second base station (12-2) in response to the notification; and
informing the core network (100) of a handover to the second base station (12-2);
the method further comprising, at the second base station (12-2):
transmitting the transferred accumulated data to the terminal (1), and then starting to obtain, from the core network (100) of the wireless communication system, data for delivery to the terminal; **characterised in that**:
the wireless communication system has discontinuous coverage with gaps between coverage areas of the neighbour base stations (12, 12-1, 12-2, .. 12-n), and **in that** the method further comprises, at the first base station (12):
recognising a radio link failure in wireless communication with the terminal (1) and in response, informing one or more neighbour base stations (12-1, 12-2, .. 12-n) and accumulating data for delivery to the terminal without informing the core network (100) of the radio link failure.

2. The method according to claim 1 wherein the informing one or more neighbour base stations (12-1, 12-2,.. 12-n) comprises providing an identifier of the terminal (1), said notification being issued by recognising the identifier.

3. The method according to any preceding claim wherein the notification is issued by the second base station (12-2), and includes at least one of:
an indication that the terminal (1) has established wireless communication with the second base station (12-2); and
an indication that the accumulated data is required to be transferred.

4. The method according to claim 3 further comprising, at the terminal (1), confirming to the second base station (12-2) that accumulated data is to be delivered to the terminal.

5. The method according to claim 1 to 3 further comprising, in a self-organizing network entity connected to, or provided in one of, the base stations (12-1, 12-2, .. 12-n):
receiving information when the terminal (1) establishes wireless communication with a base station, so as to track the presence and movement of the terminal;
predicting a movement of the terminal (1) towards the second base station (12-2) based on the received information, and
instructing the first base station (12) to transfer the accumulated data to the second base station (12-2) based on the predicted movement.

6. The method according to claim 1 to 3 applied to base stations located on a transport route, the first and second base stations (12, 12-2) being adjacent along the transport route, but wireless communication along the transport route being discontinuous, wherein
receiving a notification comprises the first base station (12) being notified that the terminal (1) is predicted to establish wireless communication with the second base station (12-2); and
the transferring is performed in advance of the second base station (12-2) establishing wireless communication with the terminal (1).

7. The method according to claim 6 wherein the first and second base stations (12, 12-2) are located in adjacent stops of an underground railway.

8. The method according to claim 7 wherein at least one of the first and second base stations (12, 12-2) is located in a railway carriage of the underground railway.

9. The method according to any preceding claim further comprising the first base station (12) starting a timer upon the radio link failure, and upon expiry of a predetermined time interval, discarding the accumulated data and informing the core network (100) of the end of wireless communication.

10. The method according to any preceding claim further comprising the first base station (12) monitoring the amount of accumulated data, and when the amount exceeds a predetermined limit, discarding the accumulated data and informing the core network (100) of the radio link failure.

11. The method according to any preceding claim wherein the accumulating comprises the first base station (12) creating a virtual terminal which the first base station treats as remaining in wireless communication with the first base station.

12. The method according to any preceding claim wherein at least one of the first and second base stations (12, 12-2) is a base station of a small cell, such as a femto base station.

13. A first base station (12) in a wireless communication system for providing a service to a user, the service involving recurrent delivery of data to a terminal (1) of the user, the first base station configured to:
obtain, from a core network (100) of the wireless communication system, data for delivery to the terminal (1) and, whilst the terminal is in wireless communication with the first base station (12), transmit the data to the terminal;
receive a notification that a second base station (12-2) among said one or more base stations (12-1, 12-2,.. 12-n) has established, or is predicted to establish, wireless communication with the terminal (1); and
transfer accumulated data to the second base station (12-2) in response to the notification;
**characterised in that** the first base station is further arranged to recognise a radio link failure in wireless communication of the terminal (1) with the first base station (12) and in response, inform one or more neighbour base stations (12-1, 12-2, .. 12-n) and accumulate data for delivery to the terminal without informing the core network (100) of the radio link failure.

14. A second base station (12-2) in a wireless communication system for providing a service to a user, the service involving recurrent delivery of data to a terminal (1) of the user, **characterised in that** the second base station is configured to:
receive, from a first base station (12), information on a radio link failure in wireless communication of the first base station with the terminal (1);
establish wireless communication with the terminal (1), and notify the first base station (12) accordingly;
receive, from the first base station (12), data for delivery to the terminal (1) which the first base station obtained from a core network (100) of the wireless communication system and accumulated following the radio link failure;
transmit the accumulated data to the terminal (1); and
start to obtain, from the core network (100) of the wireless communication system, data for delivery to the terminal (1).

15. A wireless communication system for providing a service to a user, the service involving recurrent delivery of data to a terminal (1) of the user, the system comprising the terminal (1), a first base station (12) and one or more neighbour base stations (12-1, 12-2, .. 12-n) of the first base station including a second base station (12-2), the system providing discontinuous coverage with gaps between coverage areas of the neighbour base stations (12, 12-1, 12-2, .. 12-n), wherein the base stations are configured to perform the method according to any of claims 1 to 12.

## Patentansprüche

1. Verfahren zur drahtlosen Kommunikation zum Bereitstellen eines Dienstes für einen Benutzer über ein System zur drahtlosen Kommunikation, wobei der Dienst das wiederholte Bereitstellen von Daten an einem Endgerät (1) des Benutzers über eine oder mehrere einer Mehrzahl von benachbarten Basisstationen (12, 12-1, 12-2, .. 12-n) betrifft, wobei das Verfahren an der ersten Basisstation (12) umfasst:
Erhalten von Daten zum Bereitstellen an dem Endgerät (1) von einem Kernnetzwerk (100) und Übertragen der Daten an das Endgerät, während das Endgerät eine drahtlose Kommunikation mit der ersten Basisstation (12) aufrechterhält;
Empfangen einer Mitteilung, dass eine zweite Basisstation (12-2) der einen oder mehreren Basisstationen eine drahtlose Kommunikation mit dem Endgerät (1) aufgebaut hat oder voraussichtlich aufbauen wird;
Übermitteln der gesammelten Daten an die zweite Basisstation (12-2) als Antwort auf die Mitteilung; und
Informieren des Kernnetzwerks (100) über das Weiterreichen an die zweite Basisstation (12-2), wobei das Verfahren weiterhin an der zweiten Basisstation (12-2) umfasst:
Übertragen der übermittelten gesammelten Daten an das Endgerät (1) und anschließend Beginn des Erhaltens von Daten von dem Kernnetzwerk (100) des Systems zur drahtlosen Kommunikation zur Bereitstellung an dem Endgerät; **dadurch gekennzeichnet, dass**:
das System zur drahtlosen Kommunikation eine diskontinuierliche Abdeckung mit Lücken zwischen den Abdeckungsbereichen der benachbarten Basisstationen (12, 12-1, 12-2, .. 12-n) aufweist und dass das Verfahren weiterhin an der ersten Basisstation (12) umfasst:
Erkennen eines Funkverbindungsversagens bei der drahtlosen Kommunikation mit dem Endgerät (1) und Informieren einer oder mehrerer benachbarter Basisstationen (12-1, 12-2, .. 12-n) als Reaktion darauf und Sammeln von Daten zum Bereitstellen an dem Endgerät ohne Information des Kernnetzwerks (100) über das Funkverbindungsversagen.

2. Verfahren nach Anspruch 1, wobei das Informieren einer oder mehrerer benachbarter Basisstationen (12-1, 12-2, .. 12-n) das Bereitstellen einer Kennung des Endgeräts (1) umfasst, wobei die Mitteilung durch Erkennen der Kennung gesendet wird.

3. Verfahren nach einem der vorhergehenden Ansprüche, wobei die Mitteilung von der zweiten Basisstation (12-2) gesendet wird und mindestens eines der Folgenden enthält:
eine Anzeige, dass das Endgerät (1) eine drahtlose Kommunikation mit der zweiten Basisstation (12-2) aufgebaut hat; und
eine Anzeige, dass die gesammelten Daten übermittelt werden müssen.

4. Verfahren nach Anspruch 3, weiterhin umfassend die Bestätigung des Endgeräts (1) an die zweite Basisstation (12-2), dass gesammelte Daten am Endgerät bereitgestellt werden sollen.

5. Verfahren nach Anspruch 1 bis 3, weiterhin umfassend in einer selbstorganisierenden Netzwerkeinheit, die mit den Basisstationen (12-1, 12-2, .. 12- n) verbunden oder in einer davon bereitgestellt ist:
Empfangen von Informationen, wenn das Endgerät (1) eine drahtlose Kommunikation mit einer Basisstation aufbaut, um so Vorhandensein und Bewegung des Endgeräts zu verfolgen;
Vorhersagen einer Bewegung des Endgeräts (1) zur zweiten Basisstation (12-2) auf der Grundlage der empfangenen Informationen und
Anweisen der ersten Basisstation (12), die gesammelten Daten auf der Grundlage der vorhergesagten Bewegung an die zweite Basisstation (12-2) zu übermitteln.

6. Verfahren nach Anspruch 1 bis 3, das für Basisstationen auf einem Transportweg verwendet wird, wobei die erste und die zweite Basisstation (12, 12-2) auf dem Transportweg nebeneinanderliegen, die drahtlose Kommunikation entlang des Transportwegs jedoch diskontinuierlich ist, wobei
das Empfangen einer Mitteilung umfasst, dass die erste Basisstation (12) informiert wird, dass das Endgerät (1) voraussichtlich eine drahtlose Kommunikation mit der zweiten Basisstation (12-2) aufbaut; und
das Übermitteln vor dem Aufbau einer drahtlosen Kommunikation der zweiten Basisstation (12-2) mit dem Endgerät (1) durchgeführt wird.

7. Verfahren nach Anspruch 6, wobei sich die erste und die zweite Basisstation (12, 12-2) in benachbarten Haltestellen einer Untergrundbahn befinden.

8. Verfahren nach Anspruch 7, wobei sich mindestens entweder die erste oder die zweite Basisstation (12, 12-2) in einem Wagen der Untergrundbahn befindet.

9. Verfahren nach einem der vorhergehenden Ansprüche, weiterhin umfassend, dass die erste Basisstation (12) nach dem Funkverbindungsversagen einen Timer startet und nach Ablauf eines vorbestimmten Zeitraums die gesammelten Daten verwirft und das Kernnetzwerk (100) über das Ende der drahtlosen Kommunikation informiert.

10. Verfahren nach einem der vorhergehenden Ansprüche, weiterhin umfassend, dass die erste Basisstation (12) die Menge der gesammelten Daten überwacht und die gesammelten Daten verwirft und das Kernnetzwerk (100) über das Ende der drahtlosen Kommunikation informiert, wenn die Menge einen vorbestimmten Grenzwert überschreitet.

11. Verfahren nach einem der vorhergehenden Ansprüche, wobei das Sammeln umfasst, dass die erste Basisstation (12) ein virtuelles Endgerät einrichtet, das von der ersten Basisstation behandelt wird, als wäre die drahtlose Kommunikation weiterhin aufrechterhalten.

12. Verfahren nach nach einem der vorhergehenden Ansprüche, wobei mindestens entweder die erste oder die zweite Basisstation (12, 12-2) eine Basisstation einer kleinen Zelle, wie eine Femto-Basisstation, ist.

13. Erste Basisstation (12) eines Systems zur drahtlosen Kommunikation zum Bereitstellen eines Dienstes für einen Benutzer, wobei der Dienst das wiederholte Bereitstellen von Daten an einem Endgerät (1) des Benutzers betrifft, wobei die erste Basisstation zu Folgendem konfiguriert ist:
Erhalten von Daten zum Bereitstellen an dem Endgerät (1) von einem Kernnetzwerk (100) und Übertragen der Daten an das Endgerät, während das Endgerät eine drahtlose Kommunikation mit der ersten Basisstation (12) aufrechterhält;
Empfangen einer Mitteilung, dass eine zweite Basisstation (12-2) der einen oder mehreren Basisstationen (12-1, 12-2, .. 12-n) eine drahtlose Kommunikation mit dem Endgerät (1) aufgebaut hat oder voraussichtlich aufbauen wird; und
Übermitteln der gesammelten Daten an die zweite Basisstation (12-2) als Antwort auf die Mitteilung;
**dadurch gekennzeichnet, dass** die erste Basisstation weiterhin zum Erkennen eines Funkverbindungsversagens bei der drahtlosen Kommunikation zwischen dem Endgerät (1) und der ersten Basisstation (12) und Informieren einer oder mehrerer benachbarter Basisstationen (12-1, 12-2, .. 12-n) als Reaktion darauf und Sammeln von Daten zum Bereitstellen an dem Endgerät ohne Information des Kernnetzwerks (100) über das Funkverbindungsversagen angeordnet ist.

14. Zweite Basisstation (12-2) eines Systems zur drahtlosen Kommunikation zum Bereitstellen eines Dienstes für einen Benutzer, wobei der Dienst das wiederholte Bereitstellen von Daten an einem Endgerät (1) des Benutzers betrifft, **dadurch gekennzeichnet, dass** die zweite Basisstation zu Folgendem konfiguriert ist:
Empfangen von Informationen über ein Funkverbindungsversagen bei der drahtlosen Kommunikation der ersten Basisstation mit dem Endgerät (1) von der ersten Basisstation (12);
Aufbauen einer drahtlosen Kammkommunikation mit dem Endgerät (1) und entsprechende Mitteilung an die erste Basisstation (12);
Empfangen von Daten zum Bereitstellen am Endgerät (1), die die erste Basisstation vom Kernnetzwerk (100) des Systems zur drahtlosen Kommunikation erhalten und nach dem Funkverbindungsversagen gesammelt hat, von der ersten Basisstation (12);
Übertragen der gesammelten Daten an das Endgerät (1); und
Beginn des Erhaltens von Daten von dem Kernnetzwerk (100) des Systems zur drahtlosen Kommunikation zur Bereitstellung an dem Endgerät (1).

15. System zur drahtlosen Kommunikation zum Bereitstellen eines Dienstes für einen Benutzer, wobei der Dienst das wiederholte Bereitstellen von Daten an einem Endgerät (1) des Benutzers betrifft, wobei das System das Endgerät (1), eine erste Basisstation (12) und eine oder mehrere benachbarte Basisstationen (12-1, 12-2, .. 12-n) der ersten Basisstation, einschließlich einer zweiten Basisstation (12-2), wobei das System eine diskontinuierliche Abdeckung mit Lücken zwischen den Abdeckungsbereichen der benachbarten Basisstationen (12, 12-1, 12-2, .. 12-n) vorsieht, wobei die Basisstationen zum Durchführen des Verfahrens nach einem der Ansprüche 1 bis 12 konfiguriert sind.

## Revendications

1. Procédé de communication sans fil destiné à fournir un service à un utilisateur par l'intermédiaire d'un système de communication sans fil, le service impliquant la délivrance récurrente de données à un terminal (1) de l'utilisateur par le biais d'une ou de plusieurs parmi une pluralité de stations de base (12, 12-1, 12-2, ..., 12-n) voisines, le procédé consistant, au niveau d'une première station de base (12), à :
obtenir, à partir d'un réseau central (100) du système de communication sans fil, des données destinées à être délivrées au terminal (1) et, pendant que le terminal est en communication sans fil avec la première station de base (12), à transmettre les données au terminal ;
recevoir une notification qu'une deuxième station de base (12-2) parmi ladite ou lesdites stations de base a établi, ou devrait établir, une communication sans fil avec le terminal (1) ;
transférer les données accumulées vers la deuxième station de base (12-2) en réponse à la notification ; et
informer le réseau central (100) d'un transfert vers la deuxième station de base (12-2) ;
le procédé consistant en outre, au niveau de la deuxième station de base (12-2), à :
transmettre les données accumulées transférées au terminal (1), puis à commencer à obtenir, à partir du réseau central (100) du système de communication sans fil, les données destinées à être délivrées au terminal ; **caractérisé en ce que** :
le système de communication sans fil présente une couverture discontinue à intervalles entre les zones de couverture des stations de base (12, 12-1, 12-2, ..., 12-n) voisines, et **en ce que** le procédé consiste en outre, au niveau de la première station de base (12), à :
reconnaître un échec de liaison radio dans la communication sans fil avec le terminal (1) et, en réponse, à informer une ou plusieurs stations de base (12-1, 12-2, ..., 12-n) et à accumuler les données destinées à être délivrées au terminal sans informer le réseau central (100) de l'échec de liaison radio.

2. Procédé selon la revendication 1, dans lequel le fait d'informer une ou plusieurs stations de base (12-1, 12-2, ..., 12-n) voisines consiste à fournir un identifiant au terminal (1), ladite notification étant émise par reconnaissance de l'identifiant.

3. Procédé selon l'une quelconque des revendications précédentes, dans lequel la notification est émise par la deuxième station de base (12-2), et comprend au moins un parmi :
une indication que le terminal (1) a établi une communication sans fil avec la deuxième station de base (12-2) ; et
une indication que les données accumulées nécessitent d'être transférées.

4. Procédé selon la revendication 3 consistant en outre, au niveau du terminal (1), à confirmer à la deuxième station de base (12-2) que les données accumulées doivent être délivrées au terminal.

5. Procédé selon l'une quelconque des revendications 1 à 3 consistant en outre, dans une entité de réseau auto-organisatrice connectée à, ou prévue dans une des stations de base (12-1, 12-2, ..., 12-n), à :
recevoir l'information lorsque le terminal (1) établit une communication sans fil avec une station de base, de manière à suivre la présence et le déplacement du terminal ;
prédire un déplacement du terminal (1) en direction de la deuxième station de base (12-2) en fonction de l'information reçue, et
donner l'instruction à la première station de base (12) de transférer les données accumulées vers la deuxième station de base (12-2) en fonction du déplacement prédit.

6. Procédé selon l'une quelconque des revendications 1 à 3 appliqué aux stations de base situées sur un chemin de transport, les première et deuxième stations de base (12, 12-2) étant adjacentes le long du chemin de transport, mais la communication sans fil le long du chemin de transport étant discontinue, dans lequel
la réception d'une notification consiste à ce que la première station de base (12) soit notifiée qu'il est prédit que le terminal (1) établisse une communication sans fil avec la deuxième station de base (12-2) ; et
le transfert est effectué avant que la deuxième station de base (12-2) n'établisse une communication sans fil avec le terminal (1).

7. Procédé selon la revendication 6 dans lequel les première et deuxième stations de base (12, 12-2) sont situées dans des arrêts adjacents d'un métro.

8. Procédé selon la revendication 7, dans lequel la première et/ou la deuxième station de base (12, 12-2) sont situées dans une voiture du métro.

9. Procédé selon l'une quelconque des revendications précédentes consistant en outre à ce que la première station de base (12) démarre une minuterie lors de l'échec de liaison radio, et une fois un intervalle de temps prédéterminé expiré, élimine les données accumulées et informe le réseau central (100) de la fin de la communication sans fil.

10. Procédé selon l'une quelconque des revendications précédentes consistant en outre à ce que la première station de base (12) surveille la quantité de données accumulées, et lorsque la quantité dépasse une limite prédéterminée, élimine les données accumulées et informe le réseau central (100) de l'échec de la liaison radio.

11. Procédé selon l'une quelconque des revendications précédentes dans lequel l'accumulation consiste à ce que la première station de base (12) crée un terminal virtuel que la première station de base traite comme restant en communication sans fil avec la première station de base.

12. Procédé selon l'une quelconque des revendications précédentes dans lequel la première et/ou la deuxième station de base (12, 12-2) sont une station de base d'une petite cellule, telle qu'une station de base femto.

13. Première station de base (12) dans un système de communication sans fil destiné à fournir un service à un utilisateur, le service impliquant la délivrance récurrente de données à un terminal (1) de l'utilisateur, la première station de base étant configurée pour :
obtenir, à partir d'un réseau central (100) du système de communication sans fil, des données destinées à être délivrées au terminal (1) et, pendant que le terminal est en communication sans fil avec la première station de base (12), transmettre les données au terminal ;
recevoir une notification qu'une deuxième station de base (12-2) parmi ladite ou lesdites stations de base (12-1, 12-2, ..., 12-n) a établi, ou il est prédit qu'elle établisse une communication sans fil avec le terminal (1) ; et
transférer les données accumulées vers la deuxième station de base (12-2) en réponse à la notification ;
**caractérisé en ce que** la première station de base est conçue en outre pour reconnaître un échec de liaison radio dans la communication sans fil du terminal (1) avec la première station de base (12) et, en réponse, informer une ou plusieurs stations de base (12-1, 12-2, ..., 12-n) et accumuler les données destinées à être délivrées au terminal sans informer le réseau central (100) de l'échec de liaison radio.

14. Deuxième station de base (12-2) dans un système de communication sans fil destiné à fournir un service à un utilisateur, le service impliquant la délivrance récurrente de données à un terminal (1) de l'utilisateur, **caractérisée en ce que** la deuxième station de base est configurée pour :
recevoir, d'une première station de base (12), une information sur un échec de liaison radio dans la communication sans fil de la première station de base avec le terminal (1) ;
établir une communication sans fil avec le terminal (1), et notifier la première station de base (12) en conséquence ;
recevoir, de la première station de base (12), les données destinées à être délivrées au terminal (1) que la première station de base a obtenues d'un réseau central (100) du système de communication sans fil et accumulées à la suite de l'échec de liaison radio ;
transmettre les données accumulées au terminal (1) ; et
commencer à obtenir, du réseau central (100) du système de communication sans fil, des données destinées à être délivrées au terminal (1).

15. Système de communication sans fil destiné à fournir un service à un utilisateur, le service impliquant la délivrance récurrente de données à un terminal (1) de l'utilisateur, le système comprenant le terminal (1), une première station de base (12) et une ou plusieurs stations de base (12-1, 12-2, ..., 12-n) voisines de la première station de base comprenant une deuxième station de base (12-2), le système fournissant une couverture discontinue à intervalles entre les zones de couverture des stations de base (12, 12-1, 12-2, ..., 12-n) voisines, dans lequel les stations de base sont configurées pour mettre en oeuvre le procédé selon l'une quelconque des revendications 1 à 12.
